# EUROPEAN PATENT APPLICATION

(11) **EP 3 098 587 A1**
(43) Date of publication of application: **30.11.2016**
(21) Application number: 15020094.7
(22) Date of filing: 15.06.2015
(51) Int. Cl.: G01N 5/04

(54) **DEVICE FOR THERMAL ANALYSIS OF THE OBJECTS**

(30) Priority: 29.05.2015 PL 41253615
(71) Applicant: Thermolytix So. z.o.o, 46-073 Chrosinia (PL)
(72) Inventor: Warminska, Halina, 49-300 Brzeg (PL); Bloemers, Hugo, 01309 Dresden (DE)

(57) **Abstract**

Device for thermal analysis of the objects characterized in that the device consists of process chamber (20), upstream chamber (22) with air inlet (23), two blowers (24, 29), heat sources (25, 50) and at least one temperature sensor (62, 63) wherein process chamber (20) contains an air inlet (21) which includes shower head (21) and exhaust outlet (27) subsequently containing balance arm (30) extending outward contactless from one side and actuating a load cell (40).

## Description

### Technical field

Device for thermal analysis of the objects used for thermal gravimetric analysis of entire object, assembly or subassembly, in particular photovoltaic cells.

### Background Art

Thermal gravimetric analysis instruments known in the current state of the art are adapted for detecting and indicating variations occurring in the weight of a sample under analysis as the temperature of the sample is varied over a predetermined range. US 3554001 A patent describes *Thermal gravimetric analysis apparatus* apparatus which includes a gravimetric measuring means having a sample container. In addition, US 3373598 A patent provides for *Thermal gravimetric analyzer* which is an apparatus for measuring the changing weight of a sample as a function of time and temperature comprising a support, a chamber mounted on the support, a weightresponsive means mounted in the chamber having at least one horizontally disposed arm adapted to receive a sample at the extremity, means responsive to the weightresponsive means for measuring the temperature of the sample and openings in the chamber adapted to pass a gas over the sample in a substantially horizontal direction. US 8821008 B2 patent defines *Simultaneous differential thermal analysis system* which consist in instrument that combines gravimetric measurements with measurements that require propagation of electrical signals from the sample holder to an apparatus for recording the electrical signals. Finally, US 20110122913 A1 patent defines *Thermal analysis device* comprising a replaceable sensor that can be contacted via a contact element of an electrical contacting means, a heating element and a cooling element, where the contact element(s) is thermally connected with the heating element and can be heated essentially independently of the operating state of the cooling element even when no sensor is mounted to the device. However, thermal gravimetric analysis instruments known in the current state of the art are not capable of measuring the entire objects and they are limited to measurement of samples. Device for thermal analysis of the objects being subject of this patent application does not possess the foregoing shortcomings due to fact that it is capable of conducting thermal gravimetric analysis of entire object, assembly or subassembly, in particular photovoltaic cells.

### Disclosure of invention

The essence of the solution according to the invention is a device for thermal analysis of the objects which consists of a process chamber, an upstream chamber with air inlet, two blowers, a heat sources and at least one temperature sensor wherein the process chamber contains an air inlet which includes shower head and exhaust outlet subsequently containing a balance arm extending outward contactless from one side and actuating a load cell. The air inlet of the process chamber includes a showerhead with at least one baffle plate or at least one baffle plate and perforated plate. The baffle and the perforated plate installed in the showerhead contain pattern of holes distributed along the surface of the baffle and the perforated plate what enables the laminar flow of the gas in the process chamber and reduces the flow of turbulences in the process chamber. The device according to the invention may contain an upstream chamber, where the upstream chamber pressure is higher than process chamber pressure. The upstream chamber may further contain fan or a blower enabling pressurization of the upstream chamber. The upstream chamber may be pressurized by compressed gas. The device contains heat source which is fed into the upstream chamber or is a part of the upstream chamber. The heat source may use air, inert gas or preheated gas. The device contains second heat source which uses electromagnetic radiation, conductive heating or both electromagnetic radiation and conductive heating. The device further contains a balance arm introduced into process chamber and a pedestal attached on the balance arm where the balance arm orientation is parallel to pedestal and is parallel to the airflow direction in the process chamber. The pedestal orientation is perpendicular to the airflow direction in the process chamber and the pedestal balance arm is passed through the upstream chamber while the upstream chamber contains pass-through tubes or ducts surrounding the balance arm. The pass-through tubes or ducts are extend into the process chamber. The pedestal balance arm pivots on a specified or an adjustable point where the pivot point two or more aligned jewel bearings or magnetically leveled bearing. The pedestal balance arm actuates a load cell and is balanced or biased by at least one counter balance weights. The alternative device contains pedestal holding the object introduced directly to the process chamber without use of pedestal balance arm or an adjustable point. The pedestal assembly actuates the load cell underneath the process chamber. The process chamber contains exhaust hood connected to a blower or to a fan. The device contains temperature sensor or contactless temperature sensor which measures the temperature of the object and the temperature of the pedestal. The temperature sensor contains the function of wireless data (or signal) transfer or wired data (or signal) transfer. The device further contains air cooling system for the object and the opening contains door, lid or cover. The mounting point of the blower of the device contains a check valve.

### Brief description of drawings

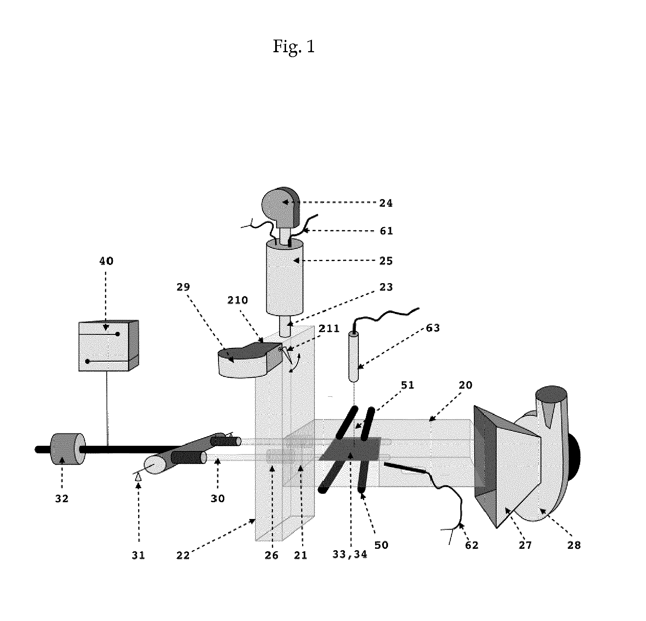

The device according to the invention is illustrated on Fig. 1

### Best Mode for Carrying Out the Invention

Device for thermal analysis of the objects which consists of a process chamber (20) in which photovoltaic cell is placed, an upstream chamber (22) with an air inlet (23), blowers (24, 29), heat sources (25, 50) and at least one temperature sensor (62, 63) wherein the process chamber (20) contains an an air inlet (21) which includes a shower head (21) and an exhaust outlet (27) subsequently containing a pedestal balance arm (30) extending outward contactless from one side and actuating a load cell (40). The air inlet (21) of the process chamber (20) includes a showerhead (21) and at least one baffle plate with pattern of holes distributed along the surface shower head (21) that enables the laminar flow of the gas in the process chamber (20) and reduces the flow of turbulences in the process chamber (20). The purpose of the shower head (21) is to enhance the airflow speed uniformity inside the process in areas where a non-uniform airspeed could cause unpredictable forces in the pivoting direction. Therefore the device contains an upstream chamber (22) that allows air to flow on to the shower head (21). The upstream chamber (22) contains a blower or a fan (24) enabling pressurization of the upstream chamber (22). The upstream chamber (22) is pressurized by compressed gas. The device contains air heat source (25), which is fed into the upstream chamber (22) or is part the upstream chamber (22). The device contains second electromagnetic radiation heat source (50). The device contains a balance arm (30) introduced into process chamber (20) and contains a pedestal (33) attached on the balance arm (30). The balance arm (30) orientation is parallel to pedestal (33) and is parallel to the airflow direction in the process chamber (20). The pedestal balance arm (30) is passed through the upstream chamber (22). The upstream chamber (22) contains pass-through tubes (26) surrounding the balance arm (30) and the pass-through tubes extend into the process chamber (20). Pass-through tubes (26) mitigates the adverse effect of air travel at incased speed in the flow direction of the process chamber (20) at the locations where the balance arm is at the perimeters of the upstream chamber (22). The balance arm (30) actuates a load cell (40). The pedestal balance arm (30) is balanced by one counter balance weight (32). The alternative pedestal assembly (33) actuates the load cell (40) underneath the process chamber (20). The device contains at least contactless temperature sensor (63) or a temperature sensor (62), which can control the heat source (50) and can register a temperature profile and finally measures temperature of the photovoltaic cell and the temperature of the pedestal (33). The device contains air cooling system for the photovoltaic cell. the mounting point (210) of the blower (29) contains a check valve (211).

## Claims

1. Device for thermal analysis of the objects **characterized in that** the device consists of process chamber (20), upstream chamber (22) with air inlet (23), two blowers (24, 29), heat sources (25, 50) and at least one temperature sensor (62, 63) wherein process chamber (20) contains an air inlet (21) which includes shower head (21) and exhaust outlet (27) subsequently containing balance arm (30) extending outward contactless from one side and actuating a load cell (40).

2. The device of claim 1, **characterized in that** the air inlet (21) of the process chamber (20) includes a showerhead (21) with at least one baffle plate.

3. The device of claim 1, **characterized in that** the air inlet (21) of the process chamber (20) includes a showerhead (21) with at least one perforated plate.

4. The device of claim 2 and 3, **characterized in that** the baffle and the perforate plate installed in the showerhead (21) contains pattern of holes distributed along the surface of the baffle and the perforated plate what enables the laminar flow of the gas in the process chamber (20) and reduces the flow of turbulences in the process chamber (20).

5. The device of claim 1, **characterized in that** the upstream chamber (22) pressure is higher than process chamber (20) pressure.

6. The device of claim 1, **characterized in that** the upstream chamber (22) contains a fan (24) enabling pressurization of the upstream chamber (22).

7. The device of claim 1, **characterized in that** the upstream chamber (22) contains a blower or a fan (24) enabling pressurization of the upstream chamber (22).

8. The device of claim 5, **characterized in that** the upstream chamber (22) is pressurized by compressed gas.

9. The device of claim 1, **characterized in that** the device contains heat source (25), which is fed into the upstream chamber (22) or is a part of the upstream chamber (22).

10. The device of claim 1, **characterized in that** the heat source (25) uses the air.

11. The device of claim 1, **characterized in that** the heat source (25) uses inert gas.

12. The device of claim 1, **characterized in that** the heat source (25) uses preheated gas.

13. The device of claim 1, **characterized in that** the heat source (50) uses electromagnetic radiation.

14. The device of claim 1, **characterized in that** the heat source (50) uses conductive heating.

15. The device of claim 1 **characterized in that** the heat source (50) uses electromagnetic radiation and conductive heating.

16. The device of claim 1, **characterized in that** the device contains a balance arm (30) introduced into process chamber (20).

17. The device of claim 1, **characterized in that** the device contains a pedestal (33) attached on the balance arm (30).

18. The device of claim 17, **characterized in that** the balance arm (30) orientation is parallel to pedestal (33) and is parallel to the airflow direction in the process chamber (20).

19. The device of claim 17, **characterized in that** the pedestal (33) orientation is perpendicular to the airflow direction in process chamber (20).

20. The device of claim 16, **characterized in that** the pedestal balance arm (30) is passed through the upstream chamber (22).

21. The device of claim 1, **characterized in that** the upstream chamber (22) contains pass-through tubes or ducts (26) surrounding the balance arm (30).

22. The device of claim 21, **characterized in that** the pass-through tubes or ducts extend into the process chamber (20).

23. The device of claim 1, **characterized in that** the pedestal balance arm (30) pivots on a specified or an adjustable point (31).

24. The device of claim 1, **characterized in that** the pivot point two or more aligned jewel bearings or magnetically leveled bearing.

25. The device of claim 1, **characterized in that** the pedestal balance arm (30) is balanced or biased by at least one counter balance weights (32).

26. The device of claim 1, **characterized in that** the device contains pedestal (33) holding the object (34) introduced directly to the process chamber (20) without use of pedestal balance arm (30) or an adjustable point (31).

27. The device of claim 1, **characterized in that** the pedestal assembly (33) actuates the load cell (40) underneath the process chamber (20).

28. The device of claim 1, **characterized in that** the process chamber (20) contains exhaust hood (27) connected to a blower or to a fan (28).

29. The device of claim 1, **characterized in that** the device contains contactless temperature sensor (63).

30. The device of claim 29, **characterized in that** the contactless a temperature sensor (63) measures the temperature of the object (34).

31. The device of claim 1, **characterized in that** the device contains a temperature sensor (62).

32. The device of claim 31, **characterized in that** the temperature sensor (62) measures temperature near the object (34).

33. The device of claim 31, **characterized in that** the temperature sensor (62) measures the temperature near the pedestal (33).

34. The device of claim 31, **characterized in that** the temperature sensor (62) contains function of wireless data or signal transfer.

35. The device of claim 31, **characterized in that** the temperature sensor (62) contains function of wired data transfer.

36. The device of claim 1, **characterized in that** the device contains air cooling system for the object.

37. The device of claim 1, **characterized in that** the load and/ or unload opening of the chamber (20) contains a door, a lid or a cover.

38. The device of claim 1, **characterized in that** the mounting point (210) of the blower (29) contains a check valve (211).
